(19)

**Europäisches Patentamt**
**European Patent Office**
**Office européen des brevets**

(11)  **EP 4 239 524 A1**

(12) **EUROPEAN PATENT APPLICATION**

(43) Date of publication:
**06.09.2023 Bulletin 2023/36**

(21) Application number: **22170543.7**

(22) Date of filing: **28.04.2022**

(51) International Patent Classification (IPC):
**G06N 3/04** *(2023.01)*          **G06N 3/08** *(2023.01)*

(52) Cooperative Patent Classification (CPC):
**G06N 3/0895; G06N 3/096;** G06N 3/0464

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2022 US 202217686276**

(71) Applicant: **NavInfo Europe B.V.**
**5657 DB Eindhoven (NL)**

(72) Inventors:
• **BHAT, Prashant Shivaram**
  **Eindhoven (NL)**

• **ARANI, Elahe**
  **Eindhoven (NL)**
• **ZONOOZ, Bahram**
  **Eindhoven (NL)**

(74) Representative: **van Breda, Jacobus**
  **Octrooibureau Los & Stigter B.V.**
  **P.O. Box 20052**
  **1000 HB Amsterdam (NL)**

Remarks:
Amended claims in accordance with Rule 137(2) EPC.

(54) **CONSISTENCY-REGULARIZATION BASED APPROACH FOR MITIGATING CATASTROPHIC FORGETTING IN CONTINUAL LEARNING**

(57)    A deep learning framework in continual learning that enforces consistency in predictions across time separated views and enables learning rich discriminative features for mitigating catastrophic forgetting in low buffer regimes. The invention is embodied in a deep-learning based computer-implemented method for continual learning over non-stationary data streams comprising a plurality of sequential tasks (T) wherein for each task (t) the method comprises the steps of training a classification head with an objective function based on experience replay; and casting consistency regularization as an auxiliary self-supervised pretext-task.

EP 4 239 524 A1

**Description**

The invention relates to a computer-implemented method in deep neural networks for mitigating catastrophic forgetting in continual learning (CL) over non-stationary data.

Continual learning refers to a learning paradigm where computational systems learn with data becoming progressively available over time by accommodating new knowledge while retaining previously learned experiences [1]. Learning tasks sequentially through continual learning is one of the biggest challenges of modern-day machine learning. A significant hurdle in continual learning is the tendency of artificial neural networks to forget previously learned information upon acquiring new information, referred to as catastrophic forgetting [14]. This phenomenon typically leads to swift drop in performance or, in the worst case, leads to previously learned information being completely overwritten by the new one [15]. The problem of catastrophic forgetting manifests in many domains including continual learning, multitask learning, and supervised learning under domain shift.

An ideal continual learning system must be plastic enough to integrate novel information and stable enough to not interfere with the consolidated knowledge [15]. In deep neural networks however, sufficient plasticity to acquire new tasks results in large weight changes disrupting consolidated knowledge, known as catastrophic forgetting. Although keeping network's weights stable mitigates forgetting, too much stability prevents the model from learning new tasks. Experience-Replay (ER) has been extensively used in the literature to address the problem of catastrophic forgetting. However, ER based methods show strong performance only in presence of large buffer size and fail to perform well under low-buffer regimes and longer task sequences.

Consistency regularization has been a widely used technique in semi-supervised learning on image data (e.g. [8, 9]). The core idea is simple: input image is perturbed in semantic-preserving ways and the classifier's sensitivity to perturbations is penalized. Consistency regularizer forces the classifier to learn representations invariant to semantic-preserving perturbations. These perturbations can manifest in many ways: It can be augmentations such as random cropping, Gaussian noise, colorization or even adversarial attacks. The regularization term is either mean-squared error [10] between the model's output of perturbed and non-perturbed images or KL-divergence [11] between the distribution over classes implied by the logits.

US2020/0074305 discloses a computer implemented method and corresponding systems and computer readable media for improving the performance of a deep neural network and to mitigate effects related to catastrophic forgetting in neural network learning. In an embodiment, the method includes storing, in memory, logits of a set of samples from a previous set of tasks; and maintaining classification information from the previous set of tasks by utilizing the logits for matching during training on a new set of tasks.

It is an object of the current invention to correct the shortcomings of the prior art and to provide a framework in continual learning that mitigates catastrophic forgetting in low buffer regimes. This and other objects which will become apparent from the following disclosure, are provided with a deep-learning based computer-implemented method for continual learning over non-stationary data streams, a data processing system, a computer-readable medium, and program having the features of one or more of the appended claims.

The invention is applicable in a multitude of technical areas, in particular in image processing and recognition. Image processing and recognition is amongst others used in autonomous driving of vehicles, but this is not the only possible application.US2020/0074305 mentions for instance as a possible application to conduct machine-automated classifications or predictions, as well as image recognition (handwriting, image classification). Notable technical application areas of the invention are further

- Road condition monitoring
- Road signs detection
- Parking occupancy detection
- Defect inspection in manufacturing
- Insect detection in agriculture
- Aerial survey and imaging

In a first aspect of the invention, the computer-implemented method comprises a plurality of sequential tasks (T) wherein for each task (t) the method comprises the steps of training a classification head with an objective function such as a cross-entropy objective function based on experience replay; and casting consistency regularization as an auxiliary self-supervised pretext-task. Such framework enforces consistency in predictions across time separated views and enables learning rich discriminative features thereby further mitigating catastrophic forgetting in low buffer regimes.

Advantageously, the step of training a classification head with a cross-entropy objective function based on experience replay comprises storing a subset of training data from previous tasks in a memory buffer (Dr) and replaying said training data alongside a task-specific data distribution (Dt) .

More advantageously, the step of casting consistency regularization as an auxiliary self-supervised pretext-task comprises aligning past and current predictions of buffered samples.

Additionally, the step of casting consistency regularization as an auxiliary self-supervised pretext-task comprises maximizing mutual information between a plurality of views by approximating a conditional joint distribution over said number of views. Suitably, said views are separated through time. And, at least one prediction is an augmented view. The augmented view is a randomly cropped view, and/or a horizontally flipped view.

In an advantageous embodiment of the invention, the continual learning model of said method comprises at least one of a domain-incremental learning scenario, a task-incremental learning scenario, a general-incremental learning scenario, and a class-incremental-learning scenario.

In particular, the method comprises a backbone network (f$\theta$) and a linear classifier (h$\theta$) representing classes in a class-incremental-learning scenario.

The invention is also embodied in a data processing system comprising means for carrying out the steps of the computer-implemented method according to the current invention.

The invention is further embodied in a computer-readable medium comprising program instructions which, when executed by a computer, cause the computer to carry out the steps of the computer-implemented method according to current invention.

The invention will hereinafter be further elucidated with reference to the drawing of an exemplary embodiment of a computer-implemented method according to the invention that is not limiting as to the appended claims.

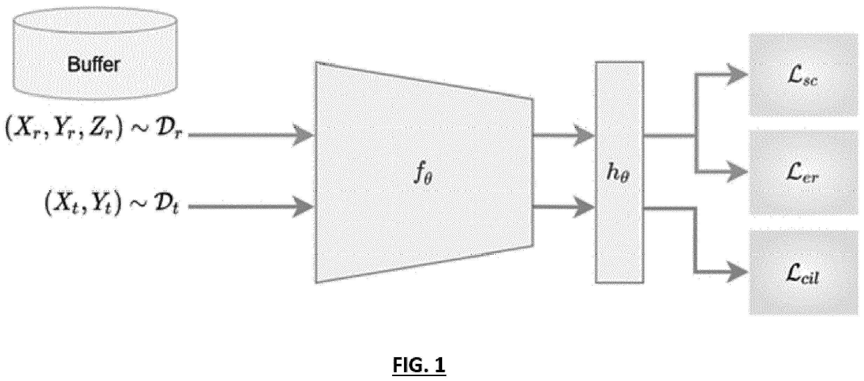

In the drawing, figure 1 shows a schematic diagram for the computer-implemented method according to the invention.

Continual learning normally consists of T sequential tasks indexed by t $\in$ (1, 2, ..., T). During each task, the input samples and the corresponding labels $(x_i, y_i)$ are drawn from the task-specific data distribution Dt. For each task, labels belong to a task-specific class set Yt $\in$ Ct.

$$\mathcal{L}_{cil} \triangleq \sum_{t=1}^{T} \mathop{\mathbb{E}}_{(X_t, Y_t) \sim \mathcal{D}_t} \left[ l_{ce}(Y_t, \Phi_\theta(X_t)) \right]$$

(Equation 1)

For the sake of simplicity, Class Incremental Learning (Class-IL) objective in above equation is considered in further discussions. The proposed method can be easily extended to other continual learning scenarios such as domain-incremental learning, task-incremental learning and general-incremental learning. The continual learning model $\Phi_\theta$ = {$f_\theta$, $h_\theta$} comprises a backbone network $f_\theta$ (such as ResNet-18 [23]) and a linear classifier $h_\theta$ representing all classes in a Class-IL scenario. The model $\Phi_\theta$ is sequentially optimized on one task at a time up to the current one t $\in$ (1, ..., Tc) with the cross-entropy objective function in Equation 1.

Continual learning is especially challenging since the data from the previous tasks are unavailable i.e. at any point during training, the model $\Phi_\theta$ has access to the current data distribution Dt alone. As the cross-entropy objective function in Equation 1 is solely optimized for the current task, plasticity overtakes stability resulting in overfitting on the current task and catastrophic forgetting of older tasks. Experience-Replay (ER) based methods sought to address this problem by storing a subset of training data from previous tasks and replaying them alongside Dt. For ER-based methods, the additional objective function can be written as:

$$\mathcal{L}_{er} \triangleq \mathop{\mathbb{E}}_{(X_r, Y_r) \sim D_r} \left[ l_{ce}(\Phi_\theta(X_r), Y_r) \right]$$

(Equation 2)

where $D_r$ represents the distribution of samples stored in the buffer. ER-based methods partially improve the stability-plasticity dilemma through twin objectives: supervisory signal from $D_t$ improves plasticity while that from Dr ameliorates the stability, thus partially addressing catastrophic forgetting. In practice, only a limited number of samples are stored in the buffer owing to memory constraints ($|D_t| \gg |D_r|$). Catastrophic forgetting largely remains unaddressed in low-buffer regimes.

Consistency regularization plays a pivotal role in approximating the past behavior by enforcing consistency across current and past exemplar outputs separated through time. Since $L_{er}$ is already enforcing consistency among ground truths, we resort to output logits. Enforcing consistency in CL is akin to solving a pretext-task of bringing current and past exemplar outputs closer in the representational space by learning corresponding shared context (i.e. buffered image). Therefore, the method according to the invention comprises casting consistency regularization as an auxiliary self-supervised pretext task. Unsupervised task-agnostic representation learning in a shared context can be achieved through maximizing mutual information $I(Z_\theta; Z_r)$. Formally, the conditional joint distribution over multi-views can be approximated through $P_{r\theta} = p(Z_\theta; Z_r | X) = \sigma(\Phi_\theta(X)) \cdot \sigma(\Phi_r(X))$. The marginals $P_\theta = p(Z_\theta)$ and $P_r = p(Z_r)$ can be obtained by summing over rows and columns of $P_{r\theta}$ matrix. Mutual information maximization can thus be achieved as follows:

$$\mathcal{L}_{sc} \triangleq - \sum_{Z_\theta} \sum_{Z_r} P_{r\theta} \ln \frac{P_{r\theta}}{P_\theta \, P_r}$$

(Equation 3)

The final CL learning objective with consistency regularization can thus be defined as:

$$\mathcal{L} = \mathcal{L}_{cil} + \alpha \mathcal{L}_{er} + \beta \mathcal{L}_{sc}$$

(Equation 4)

where $\alpha$ and $\beta$ are hyperparameters for adjusting the magnitudes of the loss functions. The algorithm for the proposed framework is defined as follows:

---

**Algorithm 1** The Proposed Framework

---

    **input:** Data streams $\mathcal{D}_t \forall \{t = 1, ..., T\}$,
    model $\Phi_\theta = \{f_\theta, h_\theta\}$, reservoir buffer $D_r = \{\}$
1: **for all** tasks $t \in \{1, 2, .., T\}$ **do**
2:     **for** minibatch $(X, Y) \in \mathcal{D}_t$ **do**
3:         **if** $\mathcal{D}_t \neq \emptyset$ **then**
4:             sample a minibatch $(X_r, Y_r) \in \mathcal{D}_r$
5:             $X_r = augment(X_r)$
6:             $Z_\theta = \Phi_\theta(X_r)$
7:             Compute $\mathcal{L}_{sc}$
8:             Compute $\mathcal{L}_{er}$
9:         $X_t = augment(X_t)$
10:        $Z_t = \Phi_\theta(X_t)$
11:        Compute $\mathcal{L}_{cil}$
12:        $\mathcal{L} = \mathcal{L}_{cil} + \alpha \mathcal{L}_{er} + \beta \mathcal{L}_{sc}$
13:        update the network $\Phi_\theta$
14: **return** model $\Phi_\theta$

---

**Experimental results:**

An extensive analysis is hereinafter provided in order to shed light on the superiority of the method according to the invention in terms of robustness under natural image corruptions and noisy labels, model calibration and bias towards recent tasks.

Following [1], the following CL scenarios are evaluated: *Class Incremental Learning (Class-IL):* The CL model encounters a new set of classes in each task and must learn to distinguish all classes encountered thus far after each task. In practice, we split CIFAR-10 [20] into partitions of 2 classes per task, respectively. Task Incremental Learning (Task-IL), although similar to Class-IL, accesses task identities to select relevant classifier for each data sample. The results of our evaluation on S-CIFAR10 are as follows:

| Bufer size | Method | S-CIFAR-10 | |
| --- | --- | --- | --- |
| | | Class-IL | Task-IL |
| - | Joint SGD | 92.20 ± 0.15 | 98.31± 0.12 |
| | | 19.62 ± 0.05 | 61.02± 3.33 |
| 200 | ER +MI | 48.19 ± 1.37 | 91.13± 0.20 |
| | | 59.56± 1.35 | 92.42 ± 0.72 |
| 500 | ER +MI | 60.93± 1.50 | 93.48±0.08 |
| | | 70.95± 1.16 | 94.48± 0.20 |

*Domain Incremental Learning (Domain-IL):* The number of classes remain the same across subsequent tasks. However, a task-dependent transformation is applied changing the input distribution for each task. Specifically, R-MNIST [21] rotates the input images by a random angle in the interval $[0; \pi]$. R-MNIST requires the model to classify all 10 MNIST [22] digits for 20 subsequent tasks. The results of our evaluation of R-MNIST are as follows:

| Method | 200 | 500 |
| --- | --- | --- |
| Joint SGD | 96.52 ± 0.12 | 96.52 ± 0.12 |
| | 70.76 ± 5.61 | 70.76 ± 5.61 |
| ER +MI | 82.09 ± 3.32 | 88.38 ± 1.54 |
| | 86.37 ± 0.10 | 88.75 ± 1.36 |

*General Incremental Learning (General-IL):* In this setting, MNIST-360 [1] models a stream of MNIST data with batches of two consecutive digits at a time. Each sample is rotated by an increasing angle and the sequence is repeated six times. General-IL exposes the CL model to both sharp class distribution shift and smooth rotational distribution shift. The results of our evaluation of MNIST-360 are as follows:

| Method | 200 | 500 |
| --- | --- | --- |
| Joint SGD | 82.05± 0.62 | 82.05± 0.62 |
| | 21.09± 0.21 | 21.09± 0.21 |
| ER +MI | 51.76 ± 2.19 | 63.78 ± 2.70 |
| | 50.84 ± 1.74 | 66.88 ± 0.69 |

Embodiments of the present invention can include every combination of features that are disclosed herein independently from each other.

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

1. Pietro Buzzega, Matteo Boschini, Angelo Porrello, Davide Abati, and Simone Calderara. Dark experience for general continual learning: a strong, simple baseline. In34th Conference on Neural Information Processing Systems(NeurIPS 2020), 2020

2. Demis Hassabis, Dharshan Kumaran, Christopher Summerfield, and Matthew Botvinick. Neuroscience-inspired artificial intelligence. Neuron, 95(2):245-258, 2017. ISSN 0896-6273.

3. Martial Mermillod, Aur elia Bugaiska, and Patrick Bonin. The stability-plasticity dilemma: Investigating the continuum from catastrophic forgetting to age-limited learning effects. Frontiers in psychology, 4:504, 2013.

4. Roger Ratcliff. Connectionist models of recognition memory: constraints imposed by learning and forgetting functions. Psychological review, 97(2):285, 1990.

5. David Lopez-Paz and Marc'Aurelio Ranzato. Gradient episodic memory for continual learning. Advances in neuralinformation processing systems, 30:6467-6476, 2017.

6. Arslan Chaudhry, Marc'Aurelio Ranzato, Marcus Rohrbach, and Mohamed Elhoseiny. Efficient lifelong learning witha-gem. InICLR, 2019

7. Sylvestre-Alvise Rebuffi, Alexander Kolesnikov, Georg Sperl, and Christoph H. Lampert. icarl: Incremental classifier and representation learning. InProceedings of the IEEE Conference on Computer Vision and Pattern Recognition(CVPR), July 2017

8. Philip Bachman, Ouais Alsharif, and Doina Precup. Learning with pseudo-ensembles. Advances in neural information processing systems, 27, 2014.

9. Xiaohua Zhai, Avital Oliver, Alexander Kolesnikov, and Lucas Beyer. S4l: Self-supervised semi-supervised learning. InProceedings of the IEEE/CVF International Conference on Computer Vision, pp. 1476-1485, 2019.

10. Mehdi Sajjadi, Mehran Javanmardi, and Tolga Tasdizen. Regularization with stochastic transformations and perturbations for deep semi-supervised learning. Advances in neural information processing systems, 29, 2016

11. Takeru Miyato, Shin-ichi Maeda, Masanori Koyama, and Shin Ishii. Virtual adversarial training: a regularization method for supervised and semi-supervised learning. IEEE transactions on pattern analysis and machine intelligence, 41(8):1979-1993, 2018

12. Ari Benjamin, David Rolnick, and Konrad Kording. Measuring and regularizing networks in function space. In International Conference on Learning Representations, 2018

13. Elahe Arani, Fahad Sarfraz, and Bahram Zonooz. Learning fast, learning slow: A general continual learning method based on complementary learning system. arXiv preprint arXiv:2201.12604 (2022).

14. Ian J Goodfellow, Mehdi Mirza, Da Xiao, Aaron Courville, and Yoshua Bengio. An empirical investigation of catastrophic forgetting in gradient-based neural networks. arXiv preprint arXiv:1312.6211, 2013.

15. German I Parisi, Ronald Kemker, Jose L Part, Christopher Kanan, and Stefan Wermter. Continual lifelong learning with neural networks: A review. Neural Networks, 113:54-71, 2019.

16. Friedemann Zenke, Ben Poole, and Surya Ganguli. Continual learning through synaptic intelligence. In International Conference on Machine Learning, pp. 3987-3995. PMLR, 2017

17. Jonathan Schwarz, Wojciech Czarnecki, Jelena Luketina, Agnieszka Grabska-Barwinska, Yee Whye Teh, Razvan Pascanu, and Raia Hadsell. Progress & compress: A scalable framework for continual learning. In International Conference on Machine Learning, pp. 4528-4537. PMLR, 2018.

18. Andrei A Rusu, Neil C Rabinowitz, Guillaume Desjardins, Hubert Soyer, James Kirkpatrick, Koray Kavukcuoglu, Razvan Pascanu, and Raia Hadsell. Progressive neural networks. arXiv preprint arXiv:1606.04671, 2016

19. Sebastian Farquhar and Yarin Gal. Towards robust evaluations of continual learning. arXiv preprint arXiv:1805.09733, 2018.

20. A. Krizhevsky. Learning multiple layers of features from tiny images. 2009

21. David Lopez-Paz and Marc'Aurelio Ranzato. Gradient episodic memory for continual learning. Advances in neural information processing systems, 30:6467-6476, 2017

22. Y. Lecun, L. Bottou, Y. Bengio, and P. Haffner. Gradient-based learning applied to document recognition. Proceedings of the IEEE, 86(11):2278-2324, 1998. doi: 10.1109/5.726791.

23. He, Kaiming, Xiangyu Zhang, Shaoqing Ren, and Jian Sun. "Deep residual learning for image recognition." In Proceedings of the IEEE conference on computer vision and pattern recognition, pp. 770-778. 2016.

**Claims**

1. A deep-learning based computer-implemented method for continual learning over non-stationary data streams comprising a plurality of sequential tasks (T), **characterized in that** for each task (t) the method comprises the steps of:

   - training a classification head with an objective function based on experience replay; and
   - casting consistency regularization as an auxiliary self-supervised pretext-task.

2. The computer-implemented method according to claim 1, **characterized in that** the step of training a classification head with an objective function based on experience replay comprises storing a subset of training data from previous tasks in a memory buffer ($D_r$) and replaying said training data alongside a task-specific data distribution (Dt).

3. The computer-implemented method according to claim 1 or 2, **characterized in that** the step of casting consistency regularization as an auxiliary self-supervised pretext-task comprises aligning past and current predictions of buffered samples.

4. The computer-implemented method according to any one of claims 1 - 3, **characterized in that** the step of casting consistency regularization as an auxiliary self-supervised pretext-task comprises maximizing mutual information between past and current predictions of buffered samples by approximating a conditional joint distribution over the predictions.

5. The computer-implemented method according to claim 4, **characterized in that** said past and current predictions are separated through time.

6. The computer-implemented method according to claim 4 or 5, **characterized in that** at least one of said past and current predictions is an augmented view.

7. The computer-implemented method according to claim 6, **characterized in that** the augmented view is a randomly cropped view, and/or a horizontally flipped view.

8. The computer-implemented method according to anyone of claims 1 - 7, **characterized in that** the continual learning model of said method comprises at least one of domain-incremental learning scenario, task-incremental learning scenario, general-incremental learning scenario, and class-incremental-learning scenario.

9. The computer-implemented method according to any one of claims 1 - 8, **characterized in that** the method comprises a backbone network ($f_\theta$) and a linear classifier ($h_\theta$) representing classes in a class-incremental-learning scenario.

10. A computer-readable medium provided with a computer program which, when loaded and executed by a computer, causes the computer to carry out the steps of the computer-implemented method according to any one of claims 1-8.

11. A data processing system comprising a computer loaded with a computer program to cause the computer to carry out the steps of the computer-implemented method according to any one of claims 1-8.

**Amended claims in accordance with Rule 137(2) EPC.**

1. A deep-learning based computer-implemented method for continual learning over non-stationary data streams comprising a plurality of sequential tasks (T), **characterized in that** for each task (t) the method comprises the steps of:

   - training a classification head with an objective function based on experience replay;
   - casting consistency regularization as an auxiliary self-supervised pretext-task by maximizing mutual information between past and current predictions of samples stored in a buffer memory and by approximating a conditional joint distribution over said past and current predictions.

2. The computer-implemented method according to claim 1, **characterized in that** the step of training a classification head with an objective function based on experience replay comprises storing a subset of training data from previous tasks in a memory buffer ($D_r$) and retraining the classification head using said training data alongside a taskspecific data distribution ($D_t$).

3. The computer-implemented method according to claim 1 or 2, **characterized in that** the step of casting consistency regularization as an auxiliary self-supervised pretext-task comprises bringing current outputs and past outputs closer in a representational space by learning corresponding shared context.

4. The computer-implemented method according to any one of claims 1-3, **characterized in that** said past and current predictions are separated through time.

5. The computer-implemented method according to any one of claims 1 - 4, **characterized in that** at least one of said past and current predictions is an augmented view.

6. The computer-implemented method according to claim 5, **characterized in that** the augmented view is a randomly cropped view, and/or a horizontally flipped view when the non-stationary data streams are image data.

7. The computer-implemented method according to anyone of claims 1 - 6, **characterized in that** the continual learning model of said method comprises at least one of domainincremental learning scenario, task-incremental learning scenario, general-incremental learning scenario, and class-incremental-learning scenario.

8. The computer-implemented method according to any one of claims 1 - 7, **characterized in that** the method comprises a backbone network ($f_\theta$) and a linear classifier ($h_\theta$) representing classes in a class-incremental-learning scenario.

9. A computer-readable medium provided with a computer program which, when loaded and executed by a computer, causes the computer to carry out the steps of the computer-implemented method according to any one of claims 1-8.

10. A data processing system comprising a computer loaded with a computer program to cause the computer to carry out the steps of the computer-implemented method according to any one of claims 1-8.

**FIG. 1**

Europäisches
Patentamt

European
Patent Office

Office européen
des brevets

# EUROPEAN SEARCH REPORT

Application Number

EP 22 17 0543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTEO BOSCHINI ET AL: "Class-Incremental Continual Learning into the eXtended DER-verse", ARXIV.ORG, CORNELL UNIVERSITY LIBRARY, 201 OLIN LIBRARY CORNELL UNIVERSITY ITHACA, NY 14853, 3 January 2022 (2022-01-03), XP091130709, * Section 3.1 and 3.2 * * Section 4 * | 1-11 | INV. G06N3/04 G06N3/08 |

-----

**TECHNICAL FIELDS SEARCHED (IPC)**

G06N

The present search report has been drawn up for all claims

| Place of search | Date of completion of the search | Examiner |
|---|---|---|
| The Hague | 11 October 2022 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

* US 20200074305 A

### Non-patent literature cited in the description

* **PIETRO BUZZEGA ; MATTEO BOSCHINI ; ANGELO PORRELLO ; DAVIDE ABATI ; SIMONE CALDERARA.** Dark experience for general continual learning: a strong, simple baseline. *34th Conference on Neural Information Processing Systems(NeurIPS 2020),* 2020
* **DEMIS HASSABIS ; DHARSHAN KUMARAN ; CHRISTOPHER SUMMERFIELD ; MATTHEW BOTVINICK.** euroscience-inspired artificial intelligence. *Neuron,* 2017, vol. 95 (2), ISSN 0896-6273, 245-258
* **MARTIAL MERMILLOD ; AUR ÉLIA BUGAISKA ; PATRICK BONIN.** The stability-plasticity dilemma: Investigating the continuum from catastrophic forgetting to age-limited learning effects. *Frontiers in psychology,* 2013, vol. 4, 504
* **ROGER RATCLIFF.** Connectionist models of recognition memory: constraints imposed by learning and forgetting functions. *Psychological review,* 1990, vol. 97 (2), 285
* **DAVID LOPEZ-PAZ ; MARC'AURELIO RANZATO.** Gradient episodic memory for continual learning. *Advances in neuralinformation processing systems,* 2017, vol. 30, 6467-6476
* **ARSLAN CHAUDHRY ; MARC'AURELIO RANZATO ; MARCUS ROHRBACH ; MOHAMED ELHOSEINY.** Efficient lifelong learning witha-gem. *InICLR,* 2019
* **SYLVESTRE-ALVISE REBUFFI ; ALEXANDER KOLESNIKOV ; GEORG SPERL ; CHRISTOPH H.** Lampert. icarl: Incremental classifier and representation learning. *Proceedings of the IEEE Conference on Computer Vision and Pattern Recognition(CVPR),* July 2017
* **PHILIP BACHMAN ; OUAIS ALSHARIF ; DOINA PRECUP.** Learning with pseudo-ensembles. *Advances in neural information processing systems,* 2014, vol. 27
* **XIAOHUA ZHAI ; AVITAL OLIVER ; ALEXANDER KOLESNIKOV ; LUCAS BEYER.** S4l: Self-supervised semi-supervised learning. *Proceedings of the IEEE/CVF International Conference on Computer Vision,* 2019, 1476-1485
* **MEHDI SAJJADI ; MEHRAN JAVANMARDI ; TOLGA TASDIZEN.** Regularization with stochastic transformations and perturbations for deep semi-supervised learning. *Advances in neural information processing systems,* 2016, vol. 29
* **TAKERU MIYATO ; SHIN-ICHI MAEDA ; MASANORI KOYAMA ; SHIN ISHII.** Virtual adversarial training: a regularization method for supervised and semi-supervised learning. *IEEE transactions on pattern analysis and machine intelligence,* 2018, vol. 41 (8), 1979-1993
* **ARI BENJAMIN ; DAVID ROLNICK ; KONRAD KORDING.** Measuring and regularizing networks in function space. *International Conference on Learning Representations,* 2018
* **ELAHE ARANI ; FAHAD SARFRAZ ; BAHRAM ZONOOZ.** Learning fast, learning slow: A general continual learning method based on complementary learning system. *arXiv:2201.12604,* 2022
* **IAN J GOODFELLOW ; MEHDI MIRZA ; DA XIAO ; AARON COURVILLE ; YOSHUA BENGIO.** An empirical investigation of catastrophic forgetting in gradient-based neural networks. *arXiv:1312.6211,* 2013
* **GERMAN I PARISI ; RONALD KEMKER ; JOSE L PART ; CHRISTOPHER KANAN ; STEFAN WERMTER.** Continual lifelong learning with neural networks: A review. *Neural Networks,* 2019, vol. 113, 54-71
* **FRIEDEMANN ZENKE ; BEN POOLE ; SURYA GANGULI.** Continual learning through synaptic intelligence. *International Conference on Machine Learning,* 2017, 3987-3995
* **JONATHAN SCHWARZ ; WOJCIECH CZARNECKI ; JELENA LUKETINA ; AGNIESZKA GRABSKA-BARWINSKA ; YEE WHYE TEH ; RAZVAN PASCANU ; RAIA HADSELL.** Progress & compress: A scalable framework for continual learning. *International Conference on Machine Learning,* 2018, 4528-4537

- **ANDREI A RUSU ; NEIL C RABINOWITZ ; GUILLAUME DESJARDINS ; HUBERT SOYER ; JAMES KIRKPATRICK ; KORAY KAVUKCUOGLU ; RAZVAN PASCANU ; RAIA HADSELL.** Progressive neural networks. *arXiv:1606.04671,* 2016
- **SEBASTIAN FARQUHAR ; YARIN GAL.** Towards robust evaluations of continual learning. *arXiv:1805.09733,* 2018
- **A. KRIZHEVSKY.** *Learning multiple layers of features from tiny images,* 2009
- **DAVID LOPEZ-PAZ ; MARC'AURELIO RANZATO.** Gradient episodic memory for continual learning. *Advances in neural information processing systems,* 2017, vol. 30, 6467-6476
- **Y. LECUN ; L. BOTTOU ; Y. BENGIO ; P. HAFFNER.** Gradient-based learning applied to document recognition. *Proceedings of the IEEE,* 1998, vol. 86 (11), 2278-2324
- **HE, KAIMING ; XIANGYU ZHANG ; SHAOQING REN ; JIAN SUN.** Deep residual learning for image recognition. *Proceedings of the IEEE conference on computer vision and pattern recognition,* 2016, 770-778